# EUROPEAN PATENT APPLICATION

(11) **EP 2 829 316 A1**
(43) Date of publication of application: **28.01.2015**
(21) Application number: 13764547.9
(22) Date of filing: 06.02.2013
(51) Int. Cl.: B01F 7/16, B01F 5/20

(54) **IMPELLOR OF STIRRING DEVICE AND STIRRING DEVICE USING SAME**

(30) Priority: 21.03.2012 KR 20120029030
(71) Applicant: Hado Co., Ltd., Incheon 404-817 (KR)
(72) Inventor: OK, Pyungkwon, Seoul 137-779 (KR)
(74) Representative: Peter, Julian
(86) International application number: PCT/KR2013/000938
(87) International publication number: WO 2013/141480

(57) **Abstract**

Provided are an impeller of a stirring device, and a stirring device using the same. More particularly, the stirring device includes the impeller of the stirring device having a shaft and a cone installed on the shaft, slowly flows an object to be stirred such as a polymer, which has fallen from a nozzle along the cone, and effectively removes air bubbles included in the object to be stirred.

## Description

### Technical Field

This invention relates to an impeller of a stirring device and a stirring device using the same, and more particularly, to an impeller of a stirring device including a shaft and a cone installed on the shaft.

### Background Art

A conventional stirring device for stirring a polymer is set forth in Korea Patent Laid-open No. 2011-85404.

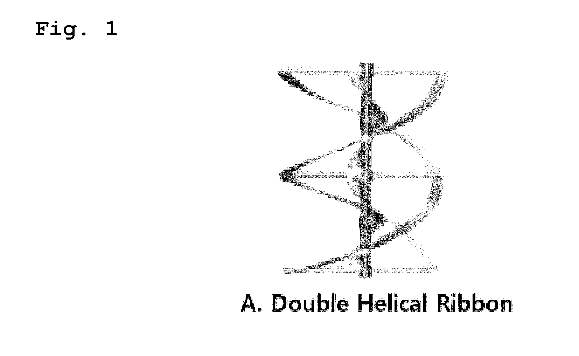

An impeller of the conventional stirring device includes only a stirring ribbon in a helical shape as described in FIG. 1.

The impeller of the conventional stirring device includes only the stirring ribbon, and thus, air bubbles included in an object to be stirred are not smoothly removed.

### Summary of Invention

### Technical Problem

The present invention is directed to providing an impeller of a stirring device and a stirring device using the same, which can effectively remove air bubbles included in an object to be stirred.

### Solution to Problem

One aspect of the present invention provides an impeller of a stirring device including a shaft, and a cone installed on the shaft.

The impeller further includes a stirring ribbon installed on the shaft. The cone includes a first cone and a second cone disposed under the first cone, and inclined planes of the first cone and the second cone are formed to be oppositely sloped. Grooves are formed on an inner or outer surface of the cone, the grooves are formed either in a radial direction or to be concentric, and a bent portion, which is bent toward a lower or upper portion of the stirring device, may be formed on a lower or upper end of the cone.

Another aspect of the present inventionprovides a stirring device including a shaft, an impeller including a cone installed on the shaft, and a nozzle which supplies an object to be stirred to an inclined plane of the cone.

The stirring device further includes a stirring ribbon installed on the shaft, and a housing configured to surround the impeller. The housing includes a tapered portion, and inclined planes of the cone and the tapered portion may be formed to be oppositely sloped.

### Advantageous Effects of Invention

In accordance with the embodiment of the inventive concept, an impeller of a stirring device and a stirring device using the same have following effects.

Since the stirring device includes a shaft and the impeller of the stirring device having a cone installed on the shaft, an object to be stirred, such as a polymer, fallen from a nozzle slowly flows along the cone, and thus, air bubbles included in the object can be effectively removed.

The cone includes a first cone and a second cone disposed under the first cone, and inclined planes of the first cone and the second cone are formed to be oppositely sloped. Therefore, the device is maintained with a compact size, and the air bubbles can be more effectively removed due to a maximized contact area between the cone and the object.

Since grooves are formed on an inner or outer surface of the cone, the object flows along the grooves. Thus, a contact area between the object and the cone is maximized, and defoamation can be more effectively achieved.

In addition, since the object is supplied to an inclined plane of the cone through a nozzle, the object can effectively flow along the inclined plane of the cone.

The stirring device further includes a housing which surrounds the impeller. The housing includes a tapered portion, wherein inclined planes of the cone and the tapered portion are formed to be oppositely sloped, and thus, the housing may also serve as a cone. Therefore, a configuration thereof can be simple, and the air bubbles included in the object can be more effectively removed.

### Brief Description of Drawings

FIG. 1 is a front view of a ribbon of a conventional stirring device.
FIG. 2 is a cross-sectional view of a stirring device in accordance with an exemplary embodiment of the present invention.
FIG. 3 describes front views of a cone in accordance with another embodiment of the present invention.
FIG. 4 describes front views of cones in accordance with still another embodiment of the present invention.
FIG. 5 describes state views of cone installation in accordance with various embodiments of the present invention.

### Detailed Description of Embodiment

Hereinafter, exemplary embodiments of the present invention will be described in detail with reference to accompanying drawings.

Furthermore, the same components among components of the present invention, which will be described hereinafter, as components of a related art will be referred to descriptions of the related art and detailed descriptions thereof will be omitted.

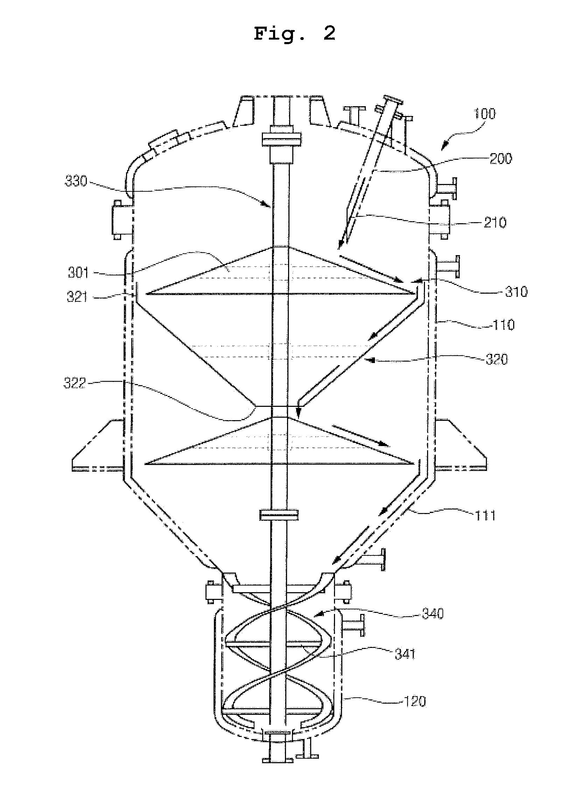

As illustrated in FIG. 2, a stirring device according to an embodiment of the present invention includes a shaft 330, an impeller including a cone installed on the shaft 330, and a nozzle 200 which supplies an object to be stirred to an inclined plane of the cone.

As illustrated in FIG. 2, the stirring device further includes a housing 100 which surrounds the impeller.

The housing 100 includes a big-hole portion 110 and a small-hole portion 120 disposed under the big-hole portion 110.

A tapered portion 111 is formed on a connection portion which connects the big-hole portion 110 with the small-hole portion 120.

The tapered portion 111 is formed with a diameter which becomes smaller toward the small-hole portion 120 from the big-hole portion 110. Accordingly, the tapered portion 111 is formed to have a sloped inner circumferential surface.

An upper end of the big-hole portion 110 and a lower end of the small-hole portion 120 are formed to have bent circular arc shapes.

The impeller includes a shaft 330, a cone installed on the shaft 330, and a stirring ribbon 340 installed on the shaft 330.

The shaft 330 is disposed in the housing 100 so as to be disposed at a central portion of the big-hole portion 110 and the small-hole portion 120.

The shaft 330 is formed to be divided into two or more parts, and includes an upper shaft and a lower shaft connected to the upper shaft.

The cone is installed on the upper shaft of the shaft 330, and the stirring ribbon 340 is installed on the lower shaft of the shaft 330. Accordingly, the cone is disposed on the big-hole portion 110 of the housing 100, and the stirring ribbon 340 is disposed on the small-hole portion 120 of the housing 100.

Since the cone and the stirring ribbon 340 are disposed as described above, defoamation is smoothly achieved through a wide area and stirring is also smoothly achieved at the same time.

In addition, since a shaft on which the cone is installed may be separated from a shaft on which the stirring ribbon 340 is installed, the shafts may be separated to replace a defective shaft or a replacement shaft with a normal shaft, and thus, maintenance of the shafts may be easy.

The cone includes a first cone 310 and a second cone 320 disposed on a lower end of the first cone 310, and inclined planes of the first cone 310 and the second cone 320 are formed to be oppositely sloped.

The first cone 310 and the second cone 320 are formed so that diameters thereof either gradually become greater toward a lower end or gradually become smaller toward the lower end.

In the embodiment, the first cone 310 is formed so that the diameter gradually becomes greater toward the lower end.

In addition, the second cone 320 is formed so that the diameter gradually becomes smaller toward the lower end.

As described above, the inclined planes of the first cone 310 and the second cone 320 are formed to be oppositely sloped.

Accordingly, the object flows along an outer surface of the first cone 310 and an inner surface of the second cone 320, and thus, contact areas between the object and the first and second cones 310 and 320 are maximized, and the object may be slowly flown. Therefore, air bubbles included in the object may be effectively removed.

Furthermore, one or more first cones 310 or second cones 320, such as the embodiment of the present invention, may be provided to more effectively achieve defoamation.

A diameter of an upper end of the second cone 320 is formed to be greater than that of a lower end of the first cone 310 so as to smoothly flow the object flowed along the first cone 310 to the second cone 320.

Furthermore, a bent portion 321, which is bent toward a lower or upper portion of the stirring device, is formed on a lower end or upper end of the cone.

In the embodiment, the bent portion 321 is formed on the upper end of the second cone 320 to prevent the fallen object from escaping to other places.

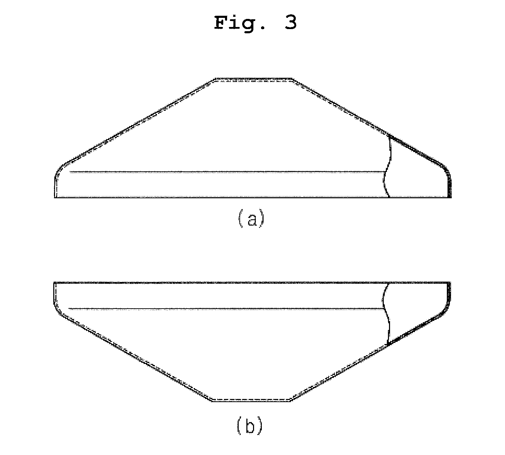

In contrast, as described in FIG. 3, a bent portion, which guides the object to be stably guided downward, may be formed on the lower end of the first cone 310.

In addition, support frames 301, which connect insides of the first and second cones 310 and 320 to the shaft 330, are provided to strengthen the first cone 310 and the second cone 320. Thus, although a large amount of the object flows along the first cone 310 and the second cone 320, shapes of the first cone 310 and the second cone 320 may be maintained.

A lower end 322 of the second cone 320 is installed to be spaced depart from the shaft 330. Thus, the object flows between the lower end 322 of the second cone 320 and the shaft 330.

In the embodiment, since the first cone 310 is additionally disposed under the second cone 320, the object flowed along the inner surface of the second cone 320 flows along the outer surface of the first cone 310. Thus, defoamation may be more effectively achieved.

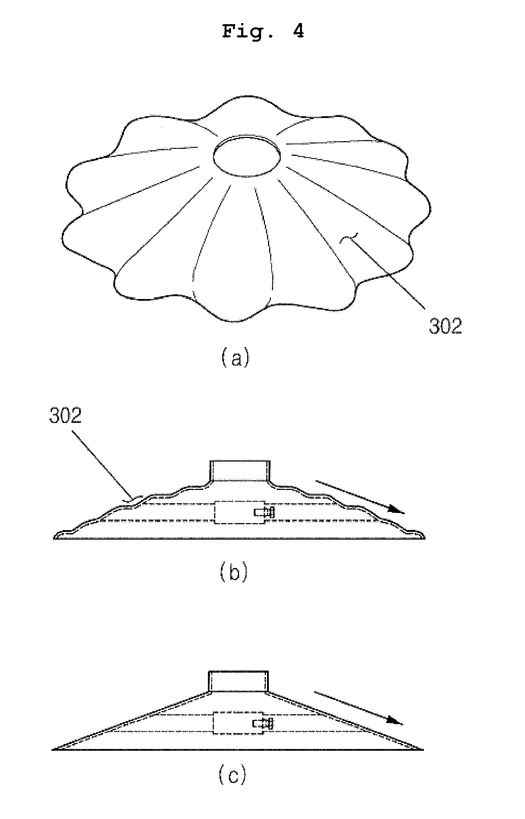

As described in FIG. 4(C), an inner surface or an outer surface, which is a surface in contact with the object in the cone, may be formed to be planar. Otherwise, as described in FIGS. 4 (A) and 4(B), grooves 302 are formed on inner or outer surfaces of the first cone 310 and the second cone 320.

In the embodiment, the plurality of grooves 302 are formed on the outer surface of the first cone 310 and on the inner surface of the second cone 320.

The grooves 302 are formed either in a radial direction as described in FIG. 4 (A) or to be concentric as described in FIG. 4(B).

The object flows along the above-described grooves 302 and a contact area between the object and the first or second cone 310 or 320 is maximized. Thus, defoamation may be more effectively achieved.

Inclined planes of the first cone 310 disposed on the lowest end among the cones and the tapered portion 111 are formed to be oppositely sloped. That is, the inclined planes of the first cone 310 disposed at the nearest location of the tapered portion 111 among the cones and the tapered portion 111 are formed to be oppositely sloped.

As described above, the lower end of the first cone 310 disposed under the second cone 320 is disposed on an upper portion of the tapered portion 111, and the object, which flows along the first cone 310, naturally flows along the tapered portion 111. Thus, the defoamation may be achieved one more time.

In addition, the object flows along the tapered portion 111, and is then supplied to the stirring ribbon 340. Thus, stirring may be more smoothly achieved.

The stirring ribbon 340 includes two or more spiral-formed ribbons which surround the shaft 330, and the spiral-formed ribbons are coupled with the shaft 330 through connection frames 341. That is, the stirring ribbon 340 is formed in a helical shape.

The stirring ribbon 340 is disposed in the small-hole portion 120.

A lower shape of the stirring ribbon 340 is formed to be bent as a circular arc shape corresponding to a lower end shape of the small-hole portion 120 of the housing 100. Accordingly, even the obj ect in the lower portion of the housing 100 may be effectively stirred.

The nozzle 200 supplies the object to the inclined plane of the first cone 310, and then the object may effectively flow along the inclined plane of the first cone 310.

The nozzle 200 is installed an upper portion of the big-hole portion 110 of the housing 100 and installed to pass through the housing 100.

The nozzle 200 is formed with a sloped lower end, and is disposed so that the lower end of the nozzle 200 is located over the first cone 310.

A sloped direction of the lower end of the nozzle 200 is formed to be opposite a sloped direction of the inclined plane of the first cone 310.

Hereinafter, operations of above-described configurations according to the embodiment of the present invention will be described.

When an object to be stirred, such as a polymer, is supplied to an upper portion of the first cone 310, which is rotated through the shaft 330, through the nozzle 200, the object flows in a spiral form along the grooves 302 of the first cone 310 and falls to the second cone 320. Then, the object flows in a spiral form along the grooves 302 of the second cone 320 and flows along the grooves 302 of the first cone 310 disposed under the second cone 320. Subsequently, the object falls to the tapered portion 111. The object flowed along the tapered portion 111 flows into the small-hole portion 120 of the housing 100 and is then stirred by the stirring ribbon 340 rotated through the shaft 330.

As described above, the obj ect sequentially flows along the first cone 310, the second cone 320, the first cone 310, and the tapered portion 111 so as to effectively achieve defoamation, and is then stirred by the stirring ribbon 340.

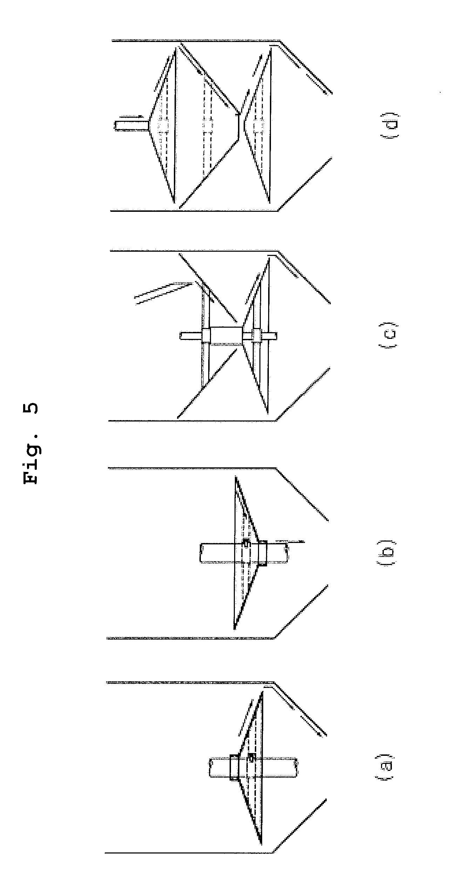

Otherwise, as described in FIGS. 5(A), 5(B), and 5(C), the cone may be disposed in the housing 100.

That is, as described in FIG. 5(A), a cone whose diameter gradually becomes greater toward a lower portion of the housing 100 may be installed to be disposed on an upper portion of the tapered portion 111 of the housing 100.

As described in FIG. 5(B), a cone whose diameter gradually becomes smaller toward the lower portion of the housing 100 may be installed to be disposed on the upper portion of the tapered portion 111 of the housing 100.

As described in FIG. 5(C), a first cone whose diameter gradually becomes smaller toward the lower portion of the housing 100 is installed, a second cone whose diameter gradually becomes greater toward the lower portion of the housing 100 is installed under the first cone, and the tapered portion 111 of the housing 100 may be installed to be disposed under the second cone.

As described above, although the invention is described with reference to the exemplary embodiment, the present invention may be modified and accomplished in other various embodiments by those of ordinary skill in the art, without departing from the spirit and scope of the invention defined by the appended claims.

## Claims

1. An impeller of a stirring device, comprising:
a shaft; and
a cone installed on the shaft.

2. The impeller according to claim 1, comprising:
a stirring ribbon installed on the shaft.

3. The impeller according to claim 1 or 2, wherein the cone includes a first cone and a second cone disposed under the first cone, and inclined planes of the first cone and the second cone are formed to be oppositely sloped.

4. The impeller according to claim 3, wherein grooves are formed on an inner surface or outer surface of the cone.

5. The impeller according to claim 4, wherein the grooves are formed either in a radial direction or to be concentric.

6. The impeller according to claim 1 or 2, wherein a bent portion is formed on a lower or upper end of the cone and bent toward a lower or upper portion of the stirring device.

7. A stirring device, comprising:
an impeller including a shaft and a cone installed on the shaft; and
a nozzle configured to supply an obj ect to be stirred to an inclined plane of the cone.

8. The stirring device according to claim 7, further comprising:
a stirring ribbon installed on the shaft.

9. The stirring device according to claim 6, further comprising:
a housing configured to surround the impeller,
wherein the housing includes a tapered portion, and inclined planes of the cone and the tapered portion are formed to be oppositely sloped.
